# EUROPEAN PATENT APPLICATION

(11) **EP 0 895 237 A1**
(43) Date of publication of application: **03.02.1999**
(21) Application number: 98301740.1
(22) Date of filing: 10.03.1998
(51) Int. Cl.: G11B 17/038, G11B 25/04

(54) **Hard disk drive**

(30) Priority: 31.07.1997 KR 9736562
(71) Applicant: Samsung Electronics Co., Ltd., Suwon City, Kyungki-do (KR)
(72) Inventor: Jang, Deok-hwan, Paldal-gu, Suwon City, Kyungki-do (KR)
(74) Representative: Robinson, Ian Michael

(57) **Abstract**

A hard disk drive including a pair of disk groups (11,12) arranged on the same plane so as to be rotated by a spindle motor (301) installed in a base frame (10), each group (11,12) having at least one stacked disk; and first and second head portions (310,320), each having at least one magnetic heads (h) for independently recording/reproducing information on a respective disk group (11,12).

## Description

The present invention relates in general to a hard disk drive used as an auxiliary memory of a computer, and more particularly, to a hard disk drive by which it is possible to record/reproduce information on a plurality of magnetic disks arranged on the base frame.

A hard disk drive in which information is recorded/reproduced by a user is mainly used as an auxiliary memory of a personal computer. Recently, the memory capacity of the hard disk drive has been increasing rapidly.

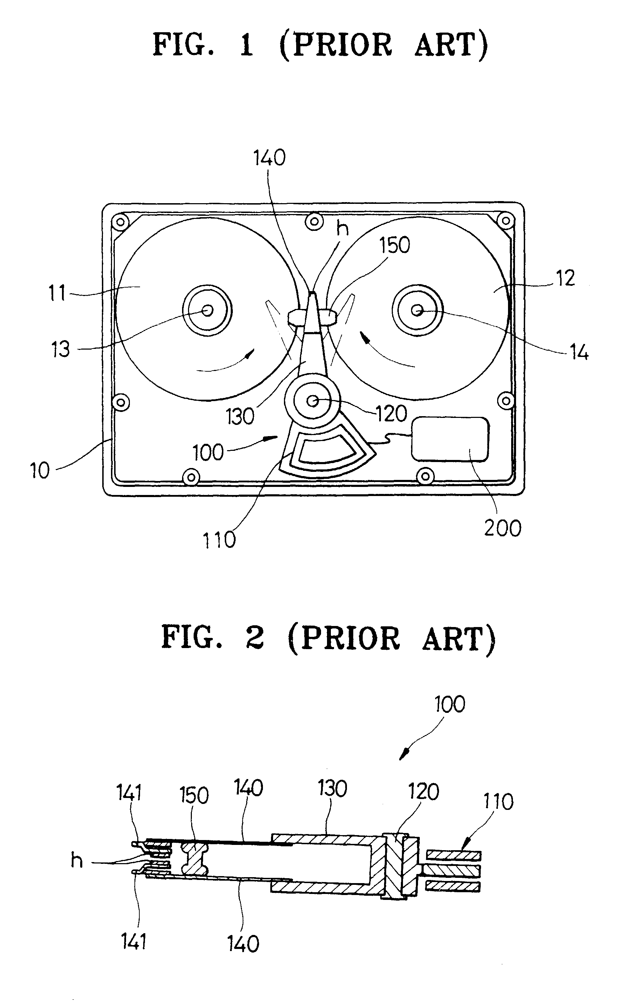

Referring to the hard disk drive shown in Figure 1, to increase the memory capacity a pair of magnetic disks 11 and 12 are installed on rotating shafts 13 and 14 of spindle motors (not shown) installed on a base frame 10. A magnetic head actuator 100 for selectively moving a magnetic head (h) toward the magnetic disks 11 and 12 includes a swing arm 130 which pivots around a shaft 120 by the operation of a voice coil motor 110 and a suspension arm 140 installed at the end of the swing arm 130. The magnetic head (h) is supported by a gimbal 141 (see Figure 2) installed at the end of the suspension arm 140. In general, it is possible to perform recording/reproducing on both sides of each of the magnetic disks 11 and 12. The magnetic head actuator 100 may include a pair of magnetic heads (h) corresponding to the upper and lower sides of the magnetic disks 11 and 12. The pair of suspension arms 140 to which the magnetic heads (h) are fixed are separated from each other by a distance greater than the thickness of the magnetic disk by a spacer 150. Reference numeral 200 denotes a control circuit portion interfaced with the main body of a computer for transmitting signals to the magnetic head (h).

According to the structure of the hard disk drive shown in Figure 1, it is possible to reduce the thickness of the hard disk drive compared to a structure in which magnetic disks are stacked since a plurality of magnetic disks can be arranged on the same plane. Furthermore, it is possible to further increase capacity by arranging a pair of magnetic disk groups, each having a plurality of stacked magnetic disks, on rotating shafts 13 and 14 of the spindle motor.

In the operation of the hard disk drive, the magnetic head (h) searches tracks of a disk 10 and detects information, moving in a radial direction of the disk 10 rotated by a spindle motor 110 by the operation of the magnetic head actuator 100. The information is signal processed through the control circuit portion 200.

However, since the hard disk drive includes only one magnetic head portion, at any one time it is possible to record/reproduce information only on one of the magnetic disks (or a magnetic disk group) among the pair of magnetic disks (or magnetic disk groups). Namely, the magnetic head (h) selectively moves and operates with respect to the magnetic disks 11 and 12. However, the access speed of the magnetic head is about half that of a hard disk drive having a structure in which there is only one stack of a plurality of magnetic disks. Therefore, the pivot speed of the swing arm 130 must be increased in order to increase the access speed of the magnetic head. Since a current having a high frequency must be supplied to the voice coil motor 110, power consumption increases. Also, since inertia increases when the pivot speed of the swing arm 130 is increased, the degree of accuracy is lowered in setting the position for searching a track of the magnetic head, thus causing malfunction.

It is an aim of at least preferred embodiments of the present invention to provide a hard disk drive having a pair of magnetic disks arranged on the same plane in which the access speed of a magnetic head is increased.

According to'one aspect of the present invention there is provided a hard disk drive, comprising:
a pair of disk groups arranged on the same plane so as to be rotated by a spindle motor installed in a base frame, each group having at least one disk; and a head portion for recording/reproducing information on said disks; characterised in that said head portion comprises: first and second head portions, each having at least one magnetic head (h) for independently recording/reproducing information on the disks of the disk groups.

Preferably, the first and second head portions each comprise a swing arm arranged to be pivotable around a pivot shaft by means of a voice coil motor and a suspension arm connected to the swing arm and having a magnetic head at or near the front end thereof.

According to another embodiment of the present invention, the hard disk drive further comprises a swing arm pivoting around a pivot shaft by a voice coil motor and two suspension arms divergently coupled to the swing arm and having magnetic heads at the front ends thereof.

Preferably, the magnetic head of the first head portion moves from an inner track to an outer track and the magnetic head of the second head portion moves from an outer track to an inner track, or vice versa. Alternatively, magnetic heads installed in the first and second head portions may move both in the same direction.

For a better understanding of the invention, and to show how embodiments of the same may be carried into effect, reference will now be made, by way of example, to the accompanying diagrammatic drawings, in which:
Figure 1 is a plan view schematically showing a conventional hard disk drive;
Figure 2 is a schematic plan view showing a magnetic head actuator extracted from Figure 1;
Figure 3 is a plan view schematically showing a hard disk drive according to a first embodiment of the present invention; and
Figure 4 is a plan view schematically showing a hard disk drive according to a second embodiment of the present invention.

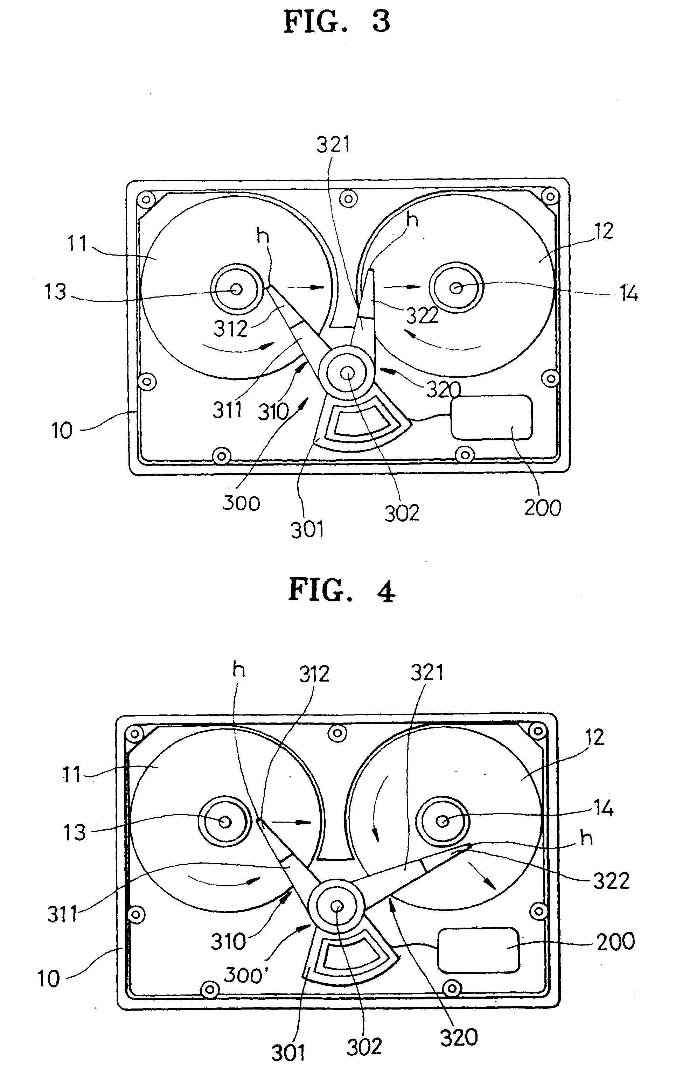

Figure 3 shows a hard disk drive according to an embodiment of the present invention, and reference numerals that are the same as those of Figures 1 and 2 denote like parts to those of Figures 1 and 2 described above. As shown in Figure 3, a pair of magnetic disks 11 and 12 are arranged on the same plane on rotating shafts 13 and 14 of spindle motors installed in a base frame 10.

The hard disk drive includes a double head portion 300 including first and second head portions 310 and 320 for recording/reproducing information on the magnetic disks 11 and 12, respectively. A pair of magnetic heads (h) for recording/reproducing information on the respective sides of the magnetic disks 11 and 12 are installed in the first and second head portions 310 and 320.

The first and second head portions 310 and 320 include first and second swing arms 311 and 321 each pivoting around a pivot shaft, preferably a common pivot shaft 302 by a voice coil motor 301 and suspension arms 312 and 322 to which the magnetic heads (h) are fixed, connected to the first and second swing arms 311 and 321.

The suspension arms 312 and 322 each include a pair of suspension members separated from each other by a distance which is greater than the thickness of the magnetic disks 11 and 12. Magnetic heads (h) applied to both sides of the magnetic disks 11 and 12 are located at in the front end of the suspension arms.

The first and second head portions 310 and 320 are driven together by the voice coil motor 301 which is a single driving source. In the first and second head portions 310 and 320, it is preferable that one magnetic head (h) moves from an inner track to an outer track and the other magnetic head (h) moves from an outer track to an inner track, or vice versa, as shown in Figure 3.

Alternatively, as shown in Figure 4, in the first and second head portions 310 and 320 of a double head portion 300', the magnetic heads (h) installed therein move in the same direction. Also, the first and second head portions 310 and 320 may be separately driven by the voice coil motor 301.

Furthermore, the first and second head portions 310 and 320 may include a plurality of pairs of magnetic heads (h) according to the number of the magnetic disks 11 and 12. That is, there can be provided a pair of magnetic disk groups arranged on the same plane, each group having a stack of magnetic disks. Also, a plurality of pairs of magnetic heads (h) corresponding to the upper and lower surfaces of the magnetic disks are fixed to the suspension arms 312 and 322 of the first and second head portions 310 and 320.

According to another embodiment of the present invention which is not shown, the two suspension arms 312 and 322 are divergently combined to one swing arm which pivots around the pivot shaft 301 (refer to Figure 3).

With the hard disk drive described herein, it is possible to double the access speed without increasing the actuator driving speed and without increasing power consumption compared to a conventional technology since the double head portion simultaneously records/reproduces information on a plurality of magnetic disks arranged on the same plane. Therefore, it is possible to provide a hard disk drive in which functions of recording/reproducing information are improved.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A hard disk drive, comprising:
a pair of disk groups (11,12) arranged on the same plane so as to be rotated by a spindle motor installed in a base frame (10), each group having at least one disk; and
a head portion (300) for recording/reproducing information on said disks (11,12);
characterised in that said head portion (300) comprises:
first and second head portions (310,320), each having at least one magnetic heads (h) for independently recording/reproducing information on the disks of the disk groups (11,12).

2. The hard disk drive of claim 1, wherein the first and second head portions (310,320) each comprise:
a swing arm (311,321) arranged to be pivotable around a pivot shaft (302) by means of a voice coil motor (301); and
a suspension arm (312,322) coupled to the swing arm (311,321) and having said magnetic head (h) located at or near the front end thereof.

3. The hard disk drive of claim 1, comprising:
a swing arm arranged to be pivotable around a pivot shaft (302) by means of a voice coil motor (301); and
two suspension arms (312,322) divergently coupled to the swing arm and each having magnetic heads (h) of said first or second head portions, respectively, located at or near the front ends thereof.

4. The hard disk drive of claims 1, 2 or 3 wherein the first and second head portions (310,320) are arranged to move together upon the operation of a voice coil motor (301).

5. The hard disk drive of any of claims 1 to 4, wherein the magnetic head of the first head portion (310) operatively moves from an inner track to an outer track on the disk or disks of the first disk group (11) and the magnetic head of the second head portion (320) operatively moves from an outer track to an inner track on a disk or disks of the second disk group (12), or vice versa.

6. The hard disk drive of any of claims 1 to 4, wherein magnetic heads (h) of the first and second head portions (310,320) are arranged to move in the same direction.

7. The hard disk drive of claims 1, 2 or 3 wherein the first and second head portions (310,320) are separately driven by the voice coil motor (301).
